(19) **Europäisches Patentamt / European Patent Office / Office européen des brevets**

(11) **EP 2 767 171 B1**

(12) **EUROPEAN PATENT SPECIFICATION**

(45) Date of publication and mention
of the grant of the patent:
**06.06.2018   Bulletin 2018/23**

(51) Int Cl.:
*A23D 7/00* *(2006.01)*      *A23D 9/00* *(2006.01)*
*A23D 7/02* *(2006.01)*

(21) Application number: **14168152.8**

(22) Date of filing: **08.04.2011**

(54) **Butter-derived spread and a method of producing it**

Aus Butter abgeleiteter Aufstrich und Herstellungsverfahren dafür

Pâte à tartiner à base de beurre et son procédé de fabrication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.04.2010   US 322009 P
08.04.2010   EP 10159436**

(43) Date of publication of application:
**20.08.2014   Bulletin 2014/34**

(62) Document number(s) of the earlier application(s) in
accordance with Art. 76 EPC:
**11714737.1 / 2 555 630**

(73) Proprietor: **Arla Foods Amba
8260 Viby J (DK)**

(72) Inventors:
• **Madsen, John Charles
7080 Børkop (DK)**
• **Tybirk, Anette
8382 Hinnerup (DK)**
• **Larsson, Jan-Aake
53383 Götene (SE)**
• **Frederiksen, Henrik Kjeldtoft
7500 Holstebro (DK)**

(74) Representative: **Guardian
IP Consulting I/S
Diplomvej, Building 381
2800 Kgs. Lyngby (DK)**

(56) References cited:
**EP-A1- 0 063 389       EP-A2- 0 393 739
WO-A1-2005/041677    CH-A5- 679 974**

**Description**

FIELD OF THE INVENTION

The present invention as illustrated in claims 1, to 16 relates to butter-derived spreads, i.e. mixtures containing a first butter, a milk fat source and vegetable oil, as well as a method of producing such butter-derived spread.

BACKGROUND

Spreadable products containing butter and vegetable oil are well-known in the prior art and are used as substitutes for regular butter. An advantage of such spreadable products, also referred to as spreads, is that, without compromising the butter taste and mouth feel, they are sufficiently soft and spreadable at refrigerated temperatures (2-8 degrees C) to be spread on bread. Such spreads are therefore ready to use directly from the refrigerator as opposed to regular butter, which is non-spreadable at such low temperatures.

Prior art:

EP 0 393 739 A2 discloses an edible spread comprising from 35-50% by weight of a fat phase and from 50-65% by weight of a dispersed aqueous phase, said fat phase comprising both butter-stearin and at least one other edible fat, said aqueous phase including a gelling or thickening agent, wherein the distribution of said butter-stearin in the fat phase is sufficiently inhomogeneous that the C-value of the spread divided by the square of the $N_{value}$ of the total fat phase as measured at 10 degrees C is less than 0.35.

EP 0 063 389 B1 discloses a spread water-in-oil emulsion comprising an aqueous phase having a pH of from 4.0 to 7.0, and constituting at most 70 percent by weight of the total emulsion; a fatty phase containing (a) a liquid oil which at 10 degrees C is substantially free of solid fat crystals and (b) a butter stearin fraction.

SUMMARY OF THE INVENTION

An object of the invention is to provide a butter-derived spread, which has a relatively high firmness but a relatively low brittleness. It is also an object of the invention to provide methods for producing such a butter-derived spread.

The present inventors have observed that spread products tend to lose their firmness when too much vegetable oil is added to the product. While a high content of vegetable oil is desirable from a nutritional point of view, it normally gives rise to an undesirably soft texture of the product.

The present inventors have found that surprisingly one can obtain a butter-derived spread having an acceptable firmness and a low brittleness by mixing a first composition containing a first butter with a milk-fat-containing lipid-continuous composition, which has been heated to a temperature above a certain temperature threshold and subsequently cooled.

Thus, an aspect of the invention relates to a method of producing a butter-derived spread, the method comprising the steps of:

a) providing a first composition comprising a first butter,

b) providing a lipid-continuous composition comprising a milk fat source, the lipid-continuous composition having a temperature of at least $T_1$, wherein $T_1$ is at least 20 degrees C,

c) cooling the lipid-continuous composition to a temperature below $T_1$, thus forming a cooled lipid-continuous composition,

d) forming the butter-derived spread comprising the cooled lipid-continuous composition and the first composition.

Yet an aspect of the invention relates to a butter-derived spread comprising butter and vegetable oil, such as the butter-derived spread obtainable from the method as defined herein.

Additional objects and advantages of the invention are described below.

BREIF DESCRIPTION OF THE FIGURES

Figure 1 is a plot illustrating the improved firmness obtained in the spread of the invention relative to a prior art spread.

Figures 2a and 2b illustrate the reduced brittleness of the spread of the present invention (2b) relative to a prior art spread (2a). The brittleness is determined using the knife-scrape test at 5 degrees C.

Figures 3a-3b are confocal microscopy pictures of the new butter-derived spread (3a), a spread prepared by oil blending (3b) and a spread prepared by re-crystallisation (3c).

## DETAILED DESCRIPTION OF THE INVENTION

As said, an aspect of the invention relates to a method of producing a butter-derived spread as defined in claims 1 to 9, the method comprising the steps of:

a) providing a first composition comprising a first butter,

b) providing a lipid-continuous composition comprising a milk fat source, the lipid-continuous composition having a temperature of at least $T_1$, wherein $T_1$ is at least 20 degrees C,

c) cooling the lipid-continuous composition to a temperature below $T_1$, thus forming a cooled lipid-continuous composition, and

d) forming the butter-derived spread comprising the cooled lipid-continuous composition and the first composition.

In a preferred embodiment of the invention, the method additionally comprises the step of e) packaging the butter-derived spread.

In the context of the present invention, the term "butter-derived spread" relates to a composition which is relatively soft and spreadable at 5 degrees C and contains milk fat and vegetable oil. A butter-derived spread is preferably lipid-continuous, and typically contains at least 30% (w/w) lipid relative to the weight of the butter-derived spread and at least 10% (w/w) milk fat relative to the weight of the butter-derived spread. The content of milk fat forms part of the total amount of lipid.

In the context of the present invention, the term "butter" relates to the lipid-continuous composition which is obtainable by phase inversion of cream or other compositions containing a high concentration of milk fat globules. The term "butter" also includes recombined butter in which the milk fat source could be butteroil or butterfat. An example is butter from the so-called Ammix process.

In the context of the present invention, the term "lipid" comprises e.g. triglycerides and phospholipids, and encompasses both oils and fats.

Generally, the terms "fat" and "oil" relate to lipids which are in solid and liquid form, respectively, at room temperature.

In the context of the present invention, the term "fat" relates to a lipid which has a solid fat content of at least 20% (w/w) at 25 degrees C. The term "oil" relates to a lipid which has a solid fat content of less than 20% (w/w) at 25 degrees C. The solid fat content may be determined according to ISO 8292-1&2:2008.

In a preferred embodiment of the invention, the vegetable oil used herein has a solid fat content of at most 15% (w/w) at 25 degrees C, preferably at most 10% (w/w), and even more preferably at most 5% (w/w) at 25 degrees C. The vegetable oil used herein may for example have a solid fat content of at most 2% (w/w) at 25 degrees C, such as at most 1% (w/w), or at most 0.5% (w/w) at 25 degrees C.

The term "lipid-continuous composition" relates to a composition which contains a continuous lipid phase, e.g. oil(s) and/or fat(s). An example of such a lipid-continuous composition is an essentially water-free continuous lipid phase comprising milk fat and vegetable oil. Alternatively, the lipid-continuous composition may contain one or more aqueous phase(s) suspended as small droplets in the continuous lipid phase. Examples of such lipid-continuous compositions are:

- butter, which effectively is an emulsion of sweet butter milk in milk fat, or
- an emulsion of water in a continuous lipid phase of milk fat and vegetable oil.

In the context of the present invention, the phrase "Y and/or X" means "Y" or "X" or "Y and X". Along the same line of logic, the phrase "$X_1$, $X_2$,..., $X_{i-1}$, and/or $X_i$" means " $X_1$" or " $X_2$" or... or "$X_{i-1}$" or "$X_i$" or any combination of the components: $X_1$, $X_2$, ...$X_{i-1}$, and $X_i$.

The temperature of the lipid-continuous composition of step b) should be at least the temperature threshold, $T_1$, and in step c) the lipid-continuous composition should be cooled below $T_1$. $T_1$ is at least 20 degrees C, but as described herein, even higher temperature thresholds may be preferred for some embodiments of the invention.

In the context of the present invention, the term "cooled lipid-continuous composition" relates to the intermediate resulting from step c). The cooled lipid-continuous composition preferably contains crystallised milk fat, and is described herein in further detail.

As said, the first composition of step a) comprises a first butter.

A wide range of butter types may be used in the present invention. However, dairy butter is presently preferred. In an embodiment of the invention, the first butter of the first composition is prepared from cream obtained from ruminant milk. Alternatively, the first butter of the first composition may comprise butter prepared from cream obtained from ruminant milk. The first butter is preferably obtained by conventional churning of the cream or other methods well-known to the person skilled in the art.

The ruminant milk may comprise, or even more preferably consist of, bovine milk. However, alternative types of ruminant milk may also be used. Examples of useful non-bovine milk are milk from sheep, goats, camels, llamas, mares and/or deer.

In order to retain the desirable firmness and ductility of the first butter of the first composition, it is preferred to keep its temperature relatively low. The temperature of the first butter of the first composition after the churning is preferably maintained at at most 16 degrees, preferably at most 14 degrees C. For example, the temperature of the first butter of the first composition may be maintained at at most 12 degrees, such as at most 10 degrees C.

Generally, the butter-derived spreads of the invention appear to have an improved texture and improved organoleptic properties relative to prior art spreads. Butter-derived spreads containing significant amounts of unheated butter are less brittle and have a more cohesive consistency at 5 degrees C than butter which has been melted and re-solidified butter. The low brittleness and the cohesive consistency are very attractive properties for on-bread spread products, i.e. spread product which should be spread on slices of bread. In blends of unheated butter and oil the cohesiveness is retained, and the product is softened by adding vegetable oils, allowing its use on bread directly from the refrigerator. By using the invention, these advantages are retained and the amount of added vegetable oil can be increased while firmness and cohesiveness are either substantially unchanged or only moderately reduced.

Additionally, it is preferred that the first butter of the first composition is relatively fresh. In an embodiment of the invention the first butter of the first composition is at most 14 days old, i.e. at most 14 days since churning, such as at most 10 days old, or at most 5 days old. For example, the first butter of the first composition may be at most 4 days old, such as at most 48 hours old, or at most 24 hours old.

Besides the first butter, the first composition may furthermore comprise a first vegetable oil. The first vegetable oil may for example be blended with the first butter after churning and/or added to the cream before churning.

In a preferred embodiment of the invention, the first composition comprises the first vegetable oil in an amount in the range of 0.1-50% (w/w) relative to the total weight of the first composition. For example, the first composition may comprise the first vegetable oil in an amount in the range of 1-40% (w/w) relative to the total weight of the first composition, preferably in an amount in the range of 2-30% (w/w), and even more preferably in an amount in the range of 5-25% (w/w) relative to the total weight of the first composition.

The first vegetable oil is preferably an edible vegetable oil and may e.g. comprise one or more oil(s) selected from the group consisting of sunflower oil, corn oil, sesame oil, soya bean oil, palm oil, linseed oil, grape seed oil, rapeseed oil, olive oil, groundnut oil, and combinations thereof.

In a preferred embodiment of the invention, the first vegetable oil comprises, or even consists of, rapeseed oil. For example, the first vegetable oil may comprise rapeseed oil in an amount of at least 90% (w/w) relative to the total weight of the first vegetable oil in the first composition.

A first composition which comprises a vegetable oil typically comprises a total amount of vegetable oil in the range of 0.1-50% (w/w) relative to the total weight of the first composition. For example, the first composition may comprise a total amount of vegetable oil in the range of 1-40% (w/w) relative to the total weight of the first composition, preferably in an amount in the range of 2-30% (w/w), and even more preferably in an amount in the range of 5-25% (w/w) relative to the total weight of the first composition.

The first composition may contain various amounts of the first butter. Normally, the first composition comprises the first butter in an amount in the range of 25-100% (w/w) relative to the total weight of the first composition. For example, the first composition may comprise the first butter in an amount in the range of 40-99% (w/w) relative to the total weight of the first composition, preferably in an amount in the range of 50-98% (w/w), and even more preferably in an amount in the range of 60-97% (w/w) relative to the total weight of the first composition.

In an embodiment of the invention the first composition comprises the first butter in an amount of at least 25% (w/w) relative to the total weight of the first composition. For example, the first composition may comprise the first butter in an amount of at least 50% (w/w) relative to the total weight of the first composition, preferably in an amount of at least 70% (w/w), and even more preferably in an amount of at least 90% (w/w) relative to the total weight of the first composition.

The first composition may even consist of the first butter.

The first composition typically comprises a total amount of butter in the range of 25-100% (w/w) relative to the total weight of the first composition. For example, the first composition may comprise a total amount of butter in the range of 40-99% (w/w) relative to the total weight of the first composition, preferably in an amount in the range of 50-98% (w/w), and even more preferably in an amount in the range of 60-97% (w/w) relative to the total weight of the first composition.

In an embodiment of the invention the first composition contains one or more of the additional ingredients mentioned herein. The one or more additional ingredients may be blended into the first butter, preferably at a temperature below 16 degrees C.

In a preferred embodiment of the invention, the first composition comprises:

- the first butter in an amount of at least 50% (w/w) relative to the weight of the first composition,
- a first vegetable oil in an amount in the range of 0-40% (w/w) relative to the weight of the first composition.

In another preferred embodiment of the invention, the first composition comprises:

- the first butter in an amount of at least 50% (w/w) relative to the weight of the first composition, and
- a first vegetable oil,

and wherein the total amount of vegetable oil of the first composition is in the range of 0-40% (w/w) relative to the weight of the first composition.

Step b) of the present invention involves the provision of the lipid-continuous composition. The lipid-continuous composition comprises a milk fat source, i.e. a source providing milk fat to the lipid-continuous composition. The milk fat source preferably contains at least 15% (w/w) milk fat. The milk fat source may e.g. comprise at least 30% (w/w) milk fat, such as cream, or it may e.g. comprise at least 75% (w/w) milk fat, such as butter.

In an embodiment of the invention the milk fat source of the lipid-continuous composition comprises, or even consists of, butter fat, such as anhydrous butter fat or substantially anhydrous butter fat.

In another embodiment of the invention the milk fat source of the lipid-continuous composition comprises, or even consists of, fractionated butter fat.

In yet an embodiment of the invention, the milk fat source of the lipid-continuous composition furthermore comprises a second butter.

In a further embodiment of the invention the milk fat source of the lipid-continuous composition furthermore comprises, or even consists of, a cream.

In an embodiment of the invention the milk fat source of the lipid-continuous composition comprises water, which e.g. is the case when the milk fat source comprises or consists of cream and/or butter.

In another embodiment of the invention the lipid-continuous composition comprises the milk fat source in an amount in the range of 1-100% (w/w) relative to the total weight of the lipid-continuous composition. For example, the lipid-continuous composition may comprise the milk fat source in an amount in the range of 10-95% (w/w) relative to the total weight of the lipid-continuous composition, preferably in the range of 20-90% (w/w), and even more preferably in the range of 30-80% (w/w) relative to the total weight of the lipid-continuous composition.

A certain amount of milk fat source is required in the lipid-continuous composition in order to obtain the inventive effects of the invention. Thus, the lipid-continuous composition preferably comprises at least 1% (w/w) of the milk fat source relative to the weight of the lipid-continuous composition, preferably at least 10% (w/w), and even more preferably at least 20% (w/w) of the milk fat source relative to the weight of the lipid-continuous composition. The lipid-continuous composition may for example comprise at least 30% (w/w) of the milk fat source relative to the weight of the lipid-continuous composition, preferably at least 40% (w/w), and such as at least 50% (w/w) of the milk fat source relative to the weight of the lipid-continuous composition.

In a preferred embodiment of the invention, the solid fat content of the milk fat of the lipid-continuous composition is:

- at most 40% (w/w) at 10 degrees C, and
- at most 20% (w/W) at 20 degrees C.

For example, the solid fat content of the milk fat of the lipid-continuous composition may be:

- at most 35% (w/w) at 10 degrees C, and
- at most 15% (w/w) at 20 degrees C.

In an embodiment of the invention, the solid fat content of the milk fat of the lipid-continuous composition is:

- in the range of 20-40% (w/w) at 10 degrees C, and
- in the range of 3-20% (w/w) at 20 degrees C.

For example, the solid fat content of the milk fat of the lipid-continuous composition may be:

- in the range of 25-35% (w/w) at 10 degrees C, and
- in the range of 4-15% (w/w) at 20 degrees C.

The solid fat content may be measured according to International Standard ISO 8292-1:2008, or International Standard ISO 8292-2:2008.

In an embodiment of the invention the lipid-continuous composition is essentially water-free. The continuous composition may for example comprise at most 1% (w/w) water relative to the weight of the lipid-continuous composition, preferably at most 0.5% (w/w), such as at most 0.1% (w/w) water relative to the weight of the lipid-continuous composition.

In a preferred embodiment of the invention the lipid-continuous composition furthermore comprises water. The lipid-continuous composition may for example be a water-in-oil emulsion.

The term "water-in-oil emulsion" is well-known in the art and relates to a composition of aqueous droplets suspended in a continuous lipophilic substance. It should be noted that the lipophilic substance is not limited to oils, but may alternatively or additionally contain fat and/or other lipophilic substances.

The lipid-continuous composition may comprise water in an amount in the range of 0.1-80% (w/w) relative to the total weight of the lipid-continuous composition. For example, the lipid-continuous composition may comprise water in an amount in the range of 1-50% (w/w) relative to the total weight of the lipid-continuous composition, preferably in the range of 2-40% (w/w), and even more preferably in the range of 4-30% (w/w) relative to the total weight of the lipid-continuous composition.

In a preferred embodiment of the invention the lipid-continuous composition furthermore comprises a second vegetable oil.

It should be noted that the presence of a second vegetable oil does not necessarily require the presence of a first vegetable oil, a third oil or any further vegetable oils.

For example, the lipid-continuous composition may comprise the second vegetable oil in an amount in the range of 0.1-70% (w/w) relative to the total weight of the lipid-continuous composition. For example, the lipid-continuous composition may comprise the second vegetable oil in an amount in the range of 10-60% (w/w) relative to the total weight of the lipid-continuous composition, preferably in the range of 20-50% (w/w), and even more preferably in the range of 25-45% (w/w) relative to the total weight of the lipid-continuous composition.

In an embodiment of the invention the second vegetable oil comprises one or more oil(s) selected from the group consisting of sunflower oil, corn oil, sesame oil, soya bean oil, palm oil, linseed oil, grape seed oil, rapeseed oil, olive oil, groundnut oil, and combinations thereof.

The second vegetable oil may e.g. comprise, or even consist of, rapeseed oil.

A lipid-continuous composition which comprises a vegetable oil typically comprises a total amount of vegetable oil in the range of 0.1-70% (w/w) relative to the total weight of the lipid-continuous composition. For example, the lipid-continuous composition may comprise a total amount of vegetable oil in the range of 10-60% (w/w) relative to the total weight of the lipid-continuous composition, preferably in an amount in the range of 20-50% (w/w), and even more preferably in an amount in the range of 25-45% (w/w) relative to the total weight of the lipid-continuous composition.

In an embodiment of the invention the lipid-continuous composition furthermore comprises a vegetable fat. However, normally it is desired to reduce the amount of vegetable fat used in the butter-derived spread. The use of natural vegetable fat, i.e. vegetable fat which has not been chemically modified or exposed to very high temperatures, gives rise to highly brittle spread products at refrigerator temperatures. The prior art suggests using inter-esterified vegetable fat instead of natural vegetable fat to circumvent the general disadvantages of vegetable fat. However, the replacement of natural ingredients with chemically modified or synthetic ingredients is not acceptable in the production of natural food products.

Additionally, vegetable oils are considered healthier than the vegetable fats which frequently are hydrogenated and therefore normally more saturated than vegetable oils. Therefore, the invention may help increasing the intake of healthy vegetable oils and reduce the intake of vegetable fat.

Normally, the lipid-continuous composition comprises vegetable fat in an amount of at most 20% (w/w) relative to the total weight of the lipid-continuous composition, preferably at most 10% (w/w), and even more preferably at most 5% (w/w) relative to the total weight of the lipid-continuous composition.

In a preferred embodiment of the invention the lipid-continuous composition comprises vegetable fat in an amount of at most 2% (w/w) relative to the total weight of the lipid-continuous composition, preferably at most 1% (w/w), and even more preferably at most 0.25% (w/w) relative to the total weight of the lipid-continuous composition.

In another preferred embodiment of the invention the lipid-continuous composition does not contain vegetable fat.

Some butter-derived spreads, e.g. low fat butter-derived spreads, may benefit from additional ingredients such as stabilisers and/or emulsifiers. Often, these ingredients can be melted or pasteurised. In the method of the invention this can be achieved directly by including the ingredients in the lipid-continuous composition, usually without any substantial process changes. This allows for spreads having the advantages of the unmelted butter of the first composition and containing the additional ingredient(s) at the same time.

Thus, the lipid-continuous composition may contain additional ingredients, e.g. the additional ingredients which are frequently used in butter or spread-production.

For example, the lipid-continuous composition may furthermore comprise milk serum protein.

Alternatively or additionally, the lipid-continuous composition may furthermore comprise a flavouring agent. Examples of useful flavouring agents are e.g. sodium chloride and/or fermented dairy products such as fermented skimmed milk.

Alternatively or additionally, the lipid-continuous composition may furthermore comprise an emulsifying agent. Example of useful emulsifying agents are lecithins, mono- and diglycerides of fatty acids, citric acid esters of mono- and diglycerides of fatty acids, lactic acid esters of mono- and diglycerides of fatty acids, polyglycerol esters of fatty acids, polyglycerol polyricinoleate, and a combination thereof.

In an embodiment of the invention the lipid-continuous composition comprises emulsifying agent in an amount in the range of 0.05-2% (w/w) relative to the total weight of the lipid-continuous composition. For example, the lipid-continuous composition may comprise emulsifying agent in an amount in the range of 0.1-1.5% (w/w) relative to the total weight of the lipid-continuous composition, preferably in the range of 0.2-1% (w/w), and even more preferably in the range of 0.25-0.8% (w/w) relative to the total weight of the lipid-continuous composition.

Alternatively or additionally, the lipid-continuous composition may furthermore comprise a stabilizing agent. Useful stabilizing agents are e.g. starch, alginates such as sodium alginate, agar, carrageenan, guar gum, pectin, pectate, casein and/or caseinate, milk serum protein, whey protein, and combinations thereof. Starch and/or pectin is the presently preferred stabilizing agent.

In an embodiment of the invention the lipid-continuous composition comprises stabilizing agent in an amount in the range of 0.1-15% (w/w) relative to the total weight of the lipid-continuous composition.

For example, the lipid-continuous composition may comprise stabilizing agent in an amount in the range of 2-14% (w/w) relative to the total weight of the lipid-continuous composition, preferably in the range of 3-13% (w/w), and even more preferably in the range of 5-12% (w/w) relative to the total weight of the lipid-continuous composition. These ranges are particularly preferred when using a stabilizing agent such as starch and/or caseinate.

Alternatively, the lipid-continuous composition may comprise stabilizing agent in an amount in the range of 0.2-5% (w/w) relative to the total weight of the lipid-continuous composition, preferably in the range of 0.3-4% (w/w), and even more preferably in the range of 0.4-2% (w/w) relative to the total weight of the lipid-continuous composition. These ranges are particularly preferred when using a stabilizing agent such as pectin.

In a preferred embodiment, the lipid-continuous composition comprises the second vegetable oil, a stabilizing agent, and the milk fat source comprising a cream. The lipid-continuous composition may for example comprise:

- the second vegetable oil in an amount in the range of 25-40% (w/w) relative to the total weight of the lipid-continuous composition,
- cream in an amount in the range of 15-30% (w/w) relative to the total weight of the lipid-continuous composition, and
- a stabilizing agent, e.g. in an amount in the range of 5-15% (w/w) relative to the weight of the lipid-continuous composition.

In a preferred embodiment, the lipid-continuous composition comprises:

- a second butter in an amount in the range of 45-65% (w/w) relative to the weight of the lipid-continuous composition,
- a second vegetable oil in an amount in the range of 30-60% (w/w) relative to the weight of the lipid-continuous composition, and
- additional water in an amount in the range of 0.5-10% (w/w) relative to the weight of the lipid-continuous composition.

In an embodiment of the invention the lipid-continuous composition comprises lipid in an amount in the range of 20-100% (w/w) relative to the weight of the lipid-continuous composition. For example, the lipid-continuous composition may comprise the lipid in an amount in the range of 30-90% (w/w) relative to the total weight of the lipid-continuous composition, preferably in the range of 40-80% (w/w), and even more preferably in the range of 50-70% (w/w) relative to the total weight of the lipid-continuous composition.

In another embodiment of the invention the lipid-continuous composition comprises protein in an amount in the range of 0.01-5% (w/w) relative to the weight of the lipid-continuous composition. For example, the lipid-continuous composition may comprise the protein in an amount in the range of 0.05-4% (w/w) relative to the total weight of the lipid-continuous composition, preferably in the range of 0.1-3% (w/w), and even more preferably in the range of 0.5-2% (w/w) relative to the total weight of the lipid-continuous composition.

Alternatively, the lipid-continuous composition may comprise protein in an amount in the range of 1-15% (w/w) relative to the weight of the lipid-continuous composition, preferably in the range of 2-14% (w/w), such as in the range of 5-12% (w/w) relative to the total weight of the lipid-continuous composition. This relatively high concentration of protein is particularly preferred when protein stabilizers such as caseinate and/or milk serum protein are used in the lipid-continuous composition.

In yet an embodiment of the invention the lipid-continuous composition comprises carbohydrate in an amount in the range of 0.01-2% (w/w) relative to the weight of the lipid-continuous composition. For example, the lipid-continuous composition may comprise carbohydrate in an amount in the range of 0.05-1.5% (w/w) relative to the total weight of the lipid-continuous composition, preferably in the range of 0.1-1% (w/w) relative to the total weight of the lipid-continuous composition.

In a further embodiment of the invention the lipid-continuous composition comprises carbohydrate in an amount in the range of 1-15% (w/w) relative to the weight of the lipid-continuous composition, preferably in the range of 2-14% (w/w), such as in the range of 5-12% (w/w) relative to the total weight of the lipid-continuous composition. This relatively high concentration of carbohydrate is particularly preferred when a carbohydrate stabilizer such as starch is used in the lipid-continuous composition.

In a preferred embodiment of the invention the lipid-continuous composition comprises phospholipids in an amount in the range of 0.01-2% (w/w) relative to the weight of the lipid-continuous composition. For example, the lipid-continuous composition may comprise phospholipids in an amount in the range of 0.05-1.8% (w/w) relative to the total weight of the lipid-continuous composition, preferably in the range of 0.1-1% (w/w), and even more preferably in the range of 0.3-0.7% (w/w) relative to the total weight of the lipid-continuous composition.

The temperature of the lipid-continuous composition provided in step b) has to be at or above a certain temperature threshold, $T_1$, to obtain the full effect of the invention. As said, $T_1$ is at least 20 degrees C, and even higher temperature thresholds may be preferred.

In a preferred embodiment of the invention the lipid of the lipid-continuous composition is softened but not melted.

In an embodiment of the invention $T_1$ is 22 degrees C. In another embodiment of the invention $T_1$ is 24 degrees C.

In a preferred embodiment of the invention $T_1$ is 26 degrees C. In a further embodiment of the invention $T_1$ is 28 degrees C. In yet an embodiment of the invention $T_1$ is 30 degrees C. In a further embodiment of the invention $T_1$ is 32 degrees C.

In another preferred embodiment of the invention the lipid of the lipid-continuous composition is on liquid form, e.g. partially or fully melted.

In a preferred embodiment of the invention $T_1$ is 34 degrees C. In another embodiment of the invention $T_1$ is 36 degrees C. In yet an embodiment of the invention $T_1$ is 38 degrees C.

The temperature of the lipid-continuous composition step b) is typically in the range of 20-90 degrees C, preferably in the range of 22-85 degrees C, and even more preferably in the range of 26-80 degrees C. For example, the temperature of the lipid-continuous composition may be in the range of 30-70 degrees C, preferably in the range of 40-65 degrees C, and even more preferably in the range of 45-60 degrees C.

Alternatively, the temperature of the lipid-continuous composition of step b) may be in the range of 20-40 degrees C, preferably in the range of 22-38 degrees C, and even more preferably in the range of 26-34 degrees C. These ranges are particularly preferred when the lipid-continuous composition has to be softened but not melted.

In another embodiment of invention the temperature of the lipid-continuous composition of step b) may be in the range of 60-90 degrees C, preferably in the range of 65-87.5 degrees C, and even more preferably in the range of 70-85 degrees C. These ranges are particularly preferred when the lipid-continuous composition has to be pasteurized.

The lipid-continuous composition may be provided by standard processes and equipment for mixing and heating. These are well-known to the person skilled in the art and may e.g. be found in the Dairy Processing Handbook, second revised edition, by Tetra Pak, 2003.

In a preferred embodiment of the invention step b) involves pasteurisation of the lipid-continuous composition, for example by keeping the lipid-continuous composition at a temperature in the range of 70-90 degrees C for a period of 5-60 seconds.

The duration of step b) may e.g. span few seconds to many hours. The temperature of the lipid-continuous composition should be at least $T_1$ for sufficiently long time to allow the lipids of the lipid-continuous composition to soften or melt, depending on the specific embodiment of the invention. For example, the temperature of the lipid-continuous composition may be above $T_1$ for a period in the range of 1 second - one day, such as 30 seconds - 12 hours, or in the range of 1 minute - 6 hours, such as 5 minutes - 2 hours, or 20 minutes - 1 hour.

Step c) involves cooling the lipid-continuous composition to obtain the cooled lipid-continuous composition. The cooling of step c) may e.g. be a step separate from step d), i.e. the lipid-continuous composition has been cooled before it is mixed with the first composition. Alternatively, cooling action may be the result of mixing the warmer lipid-continuous composition with the colder first composition. The latter may be preferred when the lipid-continuous composition is only softened and not melted.

The cooling of step c) preferably results in the formation of new lipid crystals and/or a modification of the lipid crystal structure of the lipid of the lipid-continuous composition. It should be noted that the lipid of the cooled lipid-continuous composition need not be fully crystallised in step c), and that the crystallisation may still continue during and after step d).

Step c) involves cooling the lipid-continuous composition to a temperature below $T_1$, and in an embodiment of the invention step c) involves cooling the lipid-continuous composition to a temperature in the range of 2-19 degrees C, preferably in the range of 5-19 degrees C, and even more preferably in the range of 7-19 degrees C.

In a preferred embodiment of the invention step c) involves cooling the lipid-continuous composition to a temperature in the range of 5-18 degrees C, preferably in the range of 10-16 degrees C, and even more preferably in the range of 12-14 degrees C.

In another preferred embodiment of the invention step c) involves cooling the lipid-continuous composition to a temperature of at most 19 degrees C, preferably at most 16 degrees C, and even more preferably at most 14 degrees C, such as at most 12 degrees C.

It has been found that rapid cooling is preferred and it is believed that the rapid cooling results in a favourable crystal structure of the cooled lipid-continuous composition. The duration of the cooling of step c) may e.g. span few seconds to many minutes. The duration of the cooling of step c) may for example be at most 30 minutes, preferably at most 15 minutes, and even more preferred at most 10 minutes, such as at most 5, or at most 2 minutes from the lipid-continuous composition is cooled below T1 and until the cooled lipid-continuous composition has a temperature of 18 degrees C.

In a preferred embodiment of the invention, the lipid-continuous composition is cooled using one or more scraped surface heat exchanger(s). Preferably, two or more scraped surface heat exchangers used in series whereby the lipid-continuous composition is exposed to two or more sequential cooling steps during step c).

For example, a high pressure pump may feed the lipid-continuous composition to a series of scraped surface heat exchangers to be cooled, and worked in pin rotors and fed into the blend equipment.

Step c) may furthermore involve one or more mechanical mixing steps during and/or after the cooling of the lipid-continuous composition. A pin mixer or similar mixing equipment may be used for the mechanical mixing.

In a preferred embodiment of the invention step c) comprises exposing the lipid-continuous composition to a first cooling step followed by a first mechanical mixing step followed by a second cooling step followed by a second mechanical mixing step. This may be implemented by means of a first scraped surface heat exchanger connected to a first pin mixer connected to a second scraped surface heat exchanger connected to a second pin mixer, thus allowing the lipid-continuous composition to pass through the series of cooling and mixing steps in a continuous manner.

Additional details regarding suitable scraped surface heat exchangers and pin mixers can be found in the Dairy Processing Handbook, second revised edition, by Tetra Pak, 2003, which is incorporated herein by reference for all purposes.

Step d) involves forming the butter-derived spread which comprises both the cooled lipid-continuous composition and the first composition.

In an embodiment of the invention the butter-derived spread comprises the first composition in an amount in the range of 5-95% (w/w) relative to the total weight of the butter-derived spread. For example, the butter-derived spread may comprise the first composition in an amount in the range of 5-90% (w/w) relative to the total weight of the butter-derived spread, preferably in the range of 15-80% (w/w), and even more preferably in the range of 30-70% (w/w) relative to the total weight of the butter-derived spread, such as in the range of 40-60% (w/w).

In another embodiment of the invention the butter-derived spread comprises the cooled lipid-continuous composition in an amount in the range of 5-95% (w/w) relative to the total weight of the butter-derived spread. For example, the butter-derived spread may comprise the cooled lipid-continuous composition in an amount in the range of 5-90% (w/w) relative to the total weight of the butter-derived spread, preferably in the range of 15-80% (w/w), and even more preferably in the range of 30-70% (w/w) relative to the total weight of the butter-derived spread, such as in the range of 40-60% (w/w).

In an embodiment of the invention, the butter-derived spread comprises the cooled lipid-continuous composition in an amount in the range of 5-90% (w/w) relative to the total weight of the butter-derived spread and the first composition in an amount in the range of 5-90% (w/w) relative to the total weight of the butter-derived spread. For example, the butter-derived spread may comprise the cooled lipid-continuous composition in an amount in the range of 15-80% (w/w) relative to the total weight of the butter-derived spread and the first composition in an amount in the range of 15-80% (w/w) relative to the total weight of the butter-derived spread.

In a preferred embodiment of the invention, the butter-derived spread comprises the cooled lipid-continuous composition in an amount in the range of 30-70% (w/w) relative to the total weight of the butter-derived spread and the first composition in an amount in the range of 30-70% (w/w) relative to the total weight of the butter-derived spread. For example, the butter-derived spread may comprise the cooled lipid-continuous composition in an amount in the range of 40-60% (w/w) relative to the total weight of the butter-derived spread and the first composition in an amount in the range of 40-60% (w/w) relative to the total weight of the butter-derived spread.

The butter-derived spread may furthermore comprise one or more additional ingredient(s) added during step d), e.g. one or more of the additional ingredient(s) mentioned above.

In an embodiment of the invention the one or more additional ingredient(s) comprises a third vegetable oil, which is added during step d). It should be noted that the presence of a third vegetable oil does not necessarily require the presence of a first vegetable oil, a second vegetable oil or any further vegetable oils. The third vegetable oil may be any of the vegetable oils described in relation to the first vegetable oil and may be used in the same relative amount as described for the first vegetable oil.

In another embodiment of the invention the one or more additional ingredient(s) comprises additional water, which is added during step d).

The one or more additional ingredient(s) may alternatively or additionally contain one or more flavouring agents. Examples of useful flavouring agents are e.g. sodium chloride and/or fermented dairy products such as fermented skimmed milk.

As will be appreciated by the person skilled in the art, the butter-derived spread may be formed from the first composition and the cooled lipid-continuous composition in a number of different ways. The simple approach is mixing the first composition directly with the cooled lipid-continuous composition, thereby obtaining the butter-derived spread. Alternatively, it may be preferred to add one or more additional ingredient(s) to the cooled lipid-continuous composition, thereby forming a second composition, and subsequently mixing the second composition with the first composition. It is furthermore possible to add additional ingredients to the mixture of the first composition and the cooled lipid-continuous composition or to the mixture of the first composition and the second composition.

Step d) may furthermore involve one or more additional processing steps. The one or more additional processing steps may be a cooling step, e.g. using a scraped surface heat exchanger, and/or a mixing step, e.g. using a pin mixer. Useful additional process steps may be found in the Dairy Processing Handbook, second revised edition, by Tetra Pak, 2003, which is incorporated herein by reference for all purposes.

Thus, in an embodiment of the invention step d) comprises the steps of:

d-1) mixing the first composition and the cooled lipid-continuous composition,
d-2) optionally adding one or more additional ingredients to the product of step d-1), and
d-3) optionally performing one or more additional process steps.

In another embodiment of the invention step d) comprises the steps of:

d-i) mixing the first composition and a second composition, the second composition comprising the cooled lipid-continuous composition and one or more additional ingredients,
d-ii) optionally adding one or more additional ingredients to the product of step d-i), and
d-iii) optionally performing one or more additional process steps.

It is generally preferred to keep the temperature of the ingredients used in step d) low, and in an embodiment of the invention the temperature of the ingredients of the butter-derived spread is in the range of 2-25 degrees C during step d), preferably in the range of 3-20 degrees C, and even more preferably in the range of 5-18 degrees C, such as in the range of 8-16 degrees C.

In a preferred embodiment of the invention, the method additionally comprises the step of e) packaging the butter-derived spread.

The butter-derived spread may be pumped to a packaging device and e.g. filled in plastic tubs. Each tub typically contains 200-2000 gram butter-derived spread. The tubs are normally sealed with cover leaves, eventually welded, and closed with plastic lids. Finally, the tubs may be further packed in boxes which are palletized.

In an exemplary embodiment of the invention the method comprises the steps of:

a) providing a first composition comprising a first butter, wherein the first composition comprises:

- the first butter in an amount of at least 50% (w/w) relative to the weight of the first composition,
- a first vegetable oil in an amount in the range of 0-40% (w/w) relative to the weight of the first composition,

b) providing a lipid-continuous composition comprising a milk fat source, the lipid-continuous composition having a temperature of at least $T_1$, wherein $T_1$ is at least 20 degrees C, and wherein the lipid-continuous composition comprises:

- a second butter in an amount in the range of 45-65% (w/w) relative to the weight of the lipid-continuous composition,
- a second vegetable oil in an amount in the range of 30-60% relative to the weight of the lipid-continuous composition,
- additional water in an amount in the range of 0.5-10% (w/w) relative to the weight of the lipid-continuous composition,

c) cooling the lipid-continuous composition to a temperature below $T_1$, thus forming a cooled lipid-continuous composition, wherein the temperature is at most 18 degrees C,
d) forming the butter-derived spread comprising the cooled lipid-continuous composition and the first composition, wherein the butter-derived spread comprises

- the first composition in an amount in the range of 30-70% (w/w) relative to the weight of the butter-derived spread,
- the cooled lipid-continuous composition in an amount in the range of 30-70% (w/w) relative to the weight of the butter-derived spread, and

e) packaging the butter-derived spread.

In another exemplary embodiment of the invention the method comprises the steps of:

a) providing a first composition comprising a first butter, wherein the first composition comprises:

- the first butter in an amount of at least 50% (w/w) relative to the weight of the first composition,
- a first vegetable oil in an amount in the range of 0-40% (w/w) relative to the weight of the first composition,

b) providing a lipid-continuous composition comprising a milk fat source, the lipid-continuous composition having a temperature of at least $T_1$, wherein $T_1$ is 36 degrees C, and wherein the lipid-continuous composition comprises:

- a second butter in an amount in the range of 45-65% (w/w) relative to the weight of the lipid-continuous composition,
- a second vegetable oil in an amount in the range of 30-60% relative to the weight of the lipid-continuous composition,
- additional water in an amount in the range of 0.5-10% (w/w) relative to the weight of the lipid-continuous composition,

c) cooling the lipid-continuous composition to a temperature below $T_1$, thus forming a cooled lipid-continuous composition, wherein the temperature is at most 18 degrees C,
d) forming the butter-derived spread comprising the cooled lipid-continuous composition and the first composition, wherein the butter-derived spread comprises

- the first composition in an amount in the range of 30-70% (w/w) relative to the weight of the butter-derived spread,
- the cooled lipid-continuous composition in an amount in the range of 30-70% (w/w) relative to the weight of the butter-derived spread, and

e) packaging the butter-derived spread.

In yet an exemplary embodiment of the invention the method comprises the steps of:

a) providing a first composition comprising a first butter, wherein the first composition comprises:

- the first butter in an amount of at least 50% (w/w) relative to the weight of the first composition,
- a first vegetable oil in an amount in the range of 0-40% (w/w) relative to the weight of the first composition,

b) providing a lipid-continuous composition comprising a milk fat source, the lipid-continuous composition having a temperature of at least $T_1$, wherein $T_1$ is 20 degrees C, and wherein the lipid-continuous composition comprises:

- a cream in an amount in the range of 15-30% (w/w) relative to the weight of the lipid-continuous composition,
- a second vegetable oil in an amount in the range of 25-40% (w/w) relative to the weight of the lipid-continuous composition,
- additional water in an amount in the range of 20-40% (w/w) relative to the weight of the lipid-continuous composition,
- stabilizing agent in an amount in the range of 5-15% (w/w) relative to the weight of the lipid-continuous composition,

c) cooling the lipid-continuous composition to a temperature below $T_1$, thus forming a cooled lipid-continuous composition, wherein the temperature is at most 18 degrees C,

d) forming the butter-derived spread comprising the cooled lipid-continuous composition and the first composition, wherein the butter-derived spread comprises

- the first composition in an amount in the range of 30-70% (w/w) relative to the weight of the butter-derived spread,
- the cooled lipid-continuous composition in an amount in the range of 30-70% (w/w) relative to the weight of the butter-derived spread, and

e) packaging the butter-derived spread.

In a further exemplary embodiment of the invention the method comprises the steps of:

a) providing a first composition comprising a first butter, wherein the first composition comprises:

- the first butter in an amount of at least 50% (w/w) relative to the weight of the first composition, and
- a first vegetable oil,

and wherein the total amount of vegetable oil of the first composition is in the range of 0-40% (w/w) relative to the weight of the first composition,

b) providing a lipid-continuous composition comprising a milk fat source, the lipid-continuous composition having a temperature of at least $T_1$, wherein $T_1$ is at least 20 degrees C, and wherein the lipid-continuous composition comprises:

- a second butter in an amount in the range of 45-65% (w/w) relative to the weight of the lipid-continuous composition,
- a second vegetable oil, and
- additional water in an amount in the range of 0.5-10% (w/w) relative to the weight of the lipid-continuous composition,

and wherein the total amount of vegetable oil of the lipid-continuous composition is in the range of 30-60% (w/w) relative to the weight of the lipid-continuous composition,

c) cooling the lipid-continuous composition to a temperature below $T_1$, thus forming a cooled lipid-continuous composition, wherein the temperature is at most 18 degrees C,

d) forming the butter-derived spread comprising the cooled lipid-continuous composition and the first composition, wherein the butter-derived spread comprises

- the first composition in an amount in the range of 30-70% (w/w) relative to the weight of the butter-derived spread,
- the cooled lipid-continuous composition in an amount in the range of 30-70% (w/w) relative to the weight of the butter-derived spread, and

e) packaging the butter-derived spread.

In another exemplary embodiment of the invention the method comprises the steps of:

a) providing a first composition comprising a first butter, wherein the first composition comprises:

- the first butter in an amount of at least 50% (w/w) relative to the weight of the first composition, and
- a first vegetable oil,

and wherein the total amount of vegetable oil of the first composition is in the range of 0-40% (w/w) relative to the weight of the first composition,

b) providing a lipid-continuous composition comprising a milk fat source, the lipid-continuous composition having a temperature of at least $T_1$, wherein $T_1$ is 36 degrees C, and wherein the lipid-continuous composition comprises:

- a second butter in an amount in the range of 45-65% (w/w) relative to the weight of the lipid-continuous composition,
- a second vegetable oil,
- additional water in an amount in the range of 0.5-10% (w/w) relative to the weight of the lipid-continuous composition,

and wherein the total amount of vegetable oil of the lipid-continuous composition is in the range of 30-60% (w/w) relative to the weight of the lipid-continuous composition,

c) cooling the lipid-continuous composition to a temperature below $T_1$, thus forming a cooled lipid-continuous composition, wherein the temperature is at most 18 degrees C,

d) forming the butter-derived spread comprising the cooled lipid-continuous composition and the first composition, wherein the butter-derived spread comprises

- the first composition in an amount in the range of 30-70% (w/w) relative to the weight of the butter-derived spread,
- the cooled lipid-continuous composition in an amount in the range of 30-70% (w/w) relative to the weight of the butter-derived spread, and

e) packaging the butter-derived spread.

In yet an exemplary embodiment of the invention the method comprises the steps of:

a) providing a first composition comprising a first butter, wherein the first composition comprises:

- the first butter in an amount of at least 50% (w/w) relative to the weight of the first composition,
- a first vegetable oil in an amount in the range of 0-40% (w/w) relative to the weight of the first composition,

b) providing a lipid-continuous composition comprising a milk fat source, the lipid-continuous composition having a temperature of at least $T_1$, wherein $T_1$ is 20 degrees C, and wherein the lipid-continuous composition comprises:

- a cream in an amount in the range of 15-30% (w/w) relative to the weight of the lipid-continuous composition,
- a second vegetable oil,
- additional water in an amount in the range of 20-40% (w/w) relative to the weight of the lipid-continuous composition,
- stabilizing agent in an amount in the range of 5-15% (w/w) relative to the weight of the lipid-continuous composition,

and wherein the total amount of vegetable oil of the lipid-continuous composition is in the range of 25-40% (w/w) relative to the weight of the lipid-continuous composition,

c) cooling the lipid-continuous composition to a temperature below $T_1$, thus forming a cooled lipid-continuous composition, wherein the temperature is at most 18 degrees C,

d) forming the butter-derived spread comprising the cooled lipid-continuous composition and the first composition, wherein the butter-derived spread comprises

- the first composition in an amount in the range of 30-70% (w/w) relative to the weight of the butter-derived spread,
- the cooled lipid-continuous composition in an amount in the range of 30-70% (w/w) relative to the weight of the butter-derived spread, and

e) packaging the butter-derived spread.

The method of the present invention is especially well-suited for producing organic butter-derived spreads.

In a preferred embodiment of the invention all ingredients used for preparing the butter-derived spread are organic.

In the context of the present invention, the term "organic ingredient" relates to ingredients which have been prepared without the use of artificial additives, such as synthetic pesticides, synthetic growth enhancers, and synthetic auxiliary ingredients and according to the European regulations EC No 834/2007 and EC No 889/2008.

In a preferred embodiment of the invention the butter-derived spread is an organic butter-derived spread.

In the context of the present invention, the term "organic butter-derived spread" relates to a butter-derived spread, which has been prepared exclusively from organic ingredients and according to the European regulations EC No 834/2007 and EC No 889/2008.

The method described herein may be implemented using standard dairy processing equipment, which is well-known to the person skilled in the art and may be found in general dairy handbooks such as the Dairy Processing Handbook, second revised edition, by Tetra Pak, 2003.

Yet an aspect of the invention relates to a butter-derived spread comprising butter and vegetable oil.

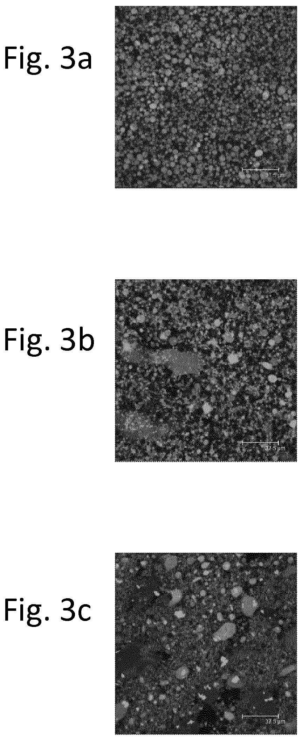

A further aspect of the invention relates to a butter-derived spread obtainable by the method defined herein. As can be seen by comparing Fig. 3a with Figs. 3b and 3c, the butter-derived spread obtained by the method of the invention (Fig. 3a) clearly has a different distribution of water droplets than the spread products of the prior art (see Example 9 for more details) and as demonstrated in Examples 4, 6 and 8, the butter-derived spreads of the invention offer a unique combination of a high firmness and a low degree of brittleness.

Disclosed herein are butter-derived spreads with lipid content in the range of 30-100% (w/w) relative to the weight of the butter-derived spread. For example, the lipid content of the butter-derived spread may be in the range of 30-85% (w/w) relative to the weight of the butter-derived spread, preferably in the range of 35-70% (w/w), and even more preferably in the range of 40-60% (w/w) relative to the weight of the butter-derived spread.

Disclosed herein are butter-derived spreads with lipid content in the range of 70-90% (w/w) relative to the weight of the butter-derived spread, and preferably in the range of 75-85% (w/w).

Disclosed herein are butter-derived spreads with lipid content in the range of 50-70% (w/w) relative to the weight of the butter-derived spread, and preferably in the range of 55-65% (w/w).

In an embodiment of the invention the lipid content of the butter-derived spread is in the range of 30-50% (w/w) relative to the weight of the butter-derived spread, and preferably in the range of 35-50% (w/w).

Disclosed herein are butter-derived spreads with lipid content in the range of 50-90% (w/w) relative to the weight of the butter-derived spread, and preferably in the range of 55-85% (w/w).

In an embodiment of the invention the lipid of the butter-derived spread has an iodine number in the range of 30-90 g $I_2$/100 g lipid, preferably in the range of 40-80 g $I_2$/100 g lipid, an even more preferably in the range of 50-70 g $I_2$/100 g.

The iodine value may be determined according to International Standard ISO 3961:2009.

In another embodiment of the invention the total amount of omega-3 fatty acids, including both esterified and free omega-3 fatty acids, is in the range of 0.2-4% (w/w) relative to the weight of the butter-derived spread. For example, the total amount of omega-3 fatty acids of the butter-derived spread may be in the range of 0.5-3.8% (w/w) relative to the weight of the butter-derived spread, preferably in the range of 1-3.6% (w/w), and even more preferably in the range of 1.5-3.4% (w/w) relative to the weight of the butter-derived spread.

Disclosed herein are butter-derived spreads with total amount of water in the range of 0-70% (w/w) relative to the weight of the butter-derived spread. For example, the water content of the butter-derived spread may be in the range of 10-60% (w/w) relative to the weight of the butter-derived spread, preferably in the range of 20-50% (w/w), and even more preferably in the range of 25-40% (w/w) relative to the weight of the butter-derived spread.

Disclosed herein are butter-derived spreads with total amount of milk fat in the range of 10-90% (w/w) relative to the weight of the butter-derived spread. For example, the total amount of milk fat of the butter-derived spread may be in the range of 20-80% (w/w) relative to the weight of the butter-derived spread, preferably in the range of 30-70% (w/w), and even more preferably in the range of 40-60% (w/w) relative to the weight of the butter-derived spread.

Disclosed herein are butter-derived spreads with total amount of vegetable oil in the range of 5-40% (w/w) relative to the weight of the butter-derived spread. For example, the total amount of vegetable oil of the butter-derived spread may be in the range of 10-40% (w/w) relative to the weight of the butter-derived spread, preferably in the range of 15-36% (w/w), and even more preferably in the range of 20-34% (w/w) relative to the weight of the butter-derived spread.

The vegetable oil preferably comprises one or more oil(s) selected from the group consisting of sunflower oil, corn oil, sesame oil, soya bean oil, palm oil, linseed oil, grape seed oil, rapeseed oil, olive oil, groundnut oil, and combinations thereof.

In a preferred embodiment of the invention, the vegetable oil of the butter-derived spread comprises, or even consists of, rapeseed oil. For example, the vegetable oil may comprise rapeseed oil in an amount of at least 90% (w/w) relative to the total weight of vegetable oil of the butter-derived spread.

As described above it may be desired to reduce or even eliminate the use of vegetable fat in spreads. Normally, the butter-derived spread comprises vegetable fat in an amount of at most 15% (w/w) relative to the total weight of the butter-derived spread, preferably at most 7% (w/w), and even more preferably at most 4% (w/w) relative to the total weight of the butter-derived spread.

In a preferred embodiment of the invention the butter-derived spread comprises vegetable fat in an amount of at most 2% (w/w) relative to the total weight of the butter-derived spread, preferably at most 1% (w/w), and even more preferably at most 0.25% (w/w) relative to the total weight of the butter-derived spread.

In another preferred embodiment of the invention the butter-derived spread does not contain vegetable fat.

In an embodiment of the invention the butter-derived spread comprises carbohydrate in an amount in the range of 0.01-2% (w/w) relative to the weight of butter-derived spread. For example, the butter-derived spread may comprise carbohydrate in an amount in the range of 0.05-1.5% (w/w) relative to the total weight of the butter-derived spread, preferably in the range of 0.1-1% (w/w) relative to the total weight of the butter-derived spread.

In a further embodiment of the invention the butter-derived spread comprises carbohydrate in an amount in the range of 1-15% (w/w) relative to the weight of the butter-derived spread, preferably in the range of 2-14% (w/w), such as in the range of 5-12% (w/w) relative to the total weight of the butter-derived spread. This relatively high concentration of carbohydrate is particularly preferred when a carbohydrate stabilizer, such as e.g. starch, is used in the butter-derived spread.

In yet an embodiment of the invention the total amount of protein of the butter-derived spread is in the range of 0.01-2% (w/w) relative to the weight of butter-derived spread. For example, the butter-derived spread may comprise protein in an amount in the range of 0.05-1.5% (w/w) relative to the total weight of the butter-derived spread, preferably in the range of 0.1-1% (w/w) relative to the total weight of the butter-derived spread.

In another embodiment of the invention the butter-derived spread comprises protein in an amount in the range of 1-15% (w/w) relative to the weight of the butter-derived spread, preferably in the range of 2-14% (w/w), such as in the range of 5-12% (w/w) relative to the total weight of the butter-derived spread. This relatively high concentration of protein is particularly preferred when protein stabilizers such as caseinate and/or milk serum protein, are used in the butter-derived spread.

In a further embodiment of the invention the total amount of casein of the butter-derived spread is in the range of 1-15% (w/w) relative to the weight of the butter-derived spread, preferably in the range of 2-14% (w/w), such as in the range of 5-12% (w/w) relative to the total weight of the butter-derived spread.

In yet another embodiment of the invention the total amount of milk serum protein of the butter-derived spread is in the range of 0.01-15% (w/w) relative to the total weight of the butter-derived spread, preferably in the range of 2-14% (w/w), such as in the range of 5-12% (w/w) relative to the total weight of the butter-derived spread.

In the context of the present invention, the term "milk serum protein" relates to the proteins which are present in the water phase of milk, such as alpha-lactalbumin, beta-lactoglobulin, etc. In this context whey protein and modified whey protein are also deemed milk serum proteins even though they may contain caseino-glycomacropeptide (cGMP) in addition to the normal milk serum proteins.

An example of a useful modified whey protein is found in WO 2005/041,677.

In a preferred embodiment of the invention the total amount of phospholipids of the butter-derived spread is in the range of 0.01-2% (w/w) relative to the weight of the butter-derived spread. For example, the total amount of phospholipids may be in the range 0.05-1.6% (w/w) relative to the weight of the butter-derived spread, preferably in the range of 0.1-1.2% (w/w), and even more preferred in the range of 0.2-0.8% (w/w) relative to the weight of the butter-derived spread.

In a preferred embodiment of the invention, wherein the butter-derived spread contains vegetable oil, e.g. via the first vegetable oil or the second vegetable oil, the butter-derived spread typically has the following fatty acid profile:

| | |
|---|---|
| C14:0 | 4-8% |
| C16:0 | 17-23% |
| C18:0 | 5-8% |
| C18:1,n-9 | 30-40% |
| C18:2, n-6 | 5-12% |
| C18:3, n-3 | 2-6% |
| Other fatty acids | 15-20% |

wherein the percentages are weight percentages relative to the total amount of fatty acids of the butter-derived spread, both including free and esterified fatty acids.

Such vegetable oil-containing, butter-derived spread normally contains less saturated fatty acids and more mono-unsaturated and poly-unsaturated fatty acids than traditional butter. The fatty acids of such butter-derived spread may e.g. have the following distribution between saturated, mono-unsaturated and poly-unsaturated fatty acids:

| | |
|---|---|
| Saturated fatty acids | 35-50% |
| Mono-unsaturated fatty acids | 35-45% |
| Poly-unsaturated fatty acids | 10-18% |

wherein the percentages are weight percentages relative to the total amount of fatty acids of the butter-derived spread, both including free and esterified fatty acids.

The method of the invention allows for the production of butter-derived spread having an increased firmness without rendering the butter-derived spread undesirably brittle.

Thus, the firmness of a butter-derived spread disclosed herein, and which has a total lipid content in the range 70-90% (w/w) relative to the weight of the butter-derived spread, is in the range of 400-1200 g at 5 degrees C, preferably in the range of 450-1000 g, and even more preferred in the range of 500-900 g.

Alternatively, the firmness of another butter-derived spread disclosed herein, which has a total lipid content in the range 50-70% (w/w) relative to the weight of the butter-derived spread, may be in the range of 350-700 g at 5 degrees C, preferably in the range of 375-650 g, and even more preferred in the range of 400-600 g.

The firmness of a butter-derived spread is determined according to Example 5.

Disclosed herein is a butter-derived spread which comprises:

- lipid in an amount in the range of 30-85% (w/w) relative to the weight of the butter-derived spread,
- milk fat in an amount in the range of 20-80% (w/w) relative to the weight of the butter-derived spread,
- vegetable oil in an amount in the range of 5-40% (w/w) relative to the weight of the butter-derived spread, and
- water in an amount in the range of 10-40% (w/w) relative to the weight of the butter-derived spread.

As will be apparent to the skilled person, the term "lipid" includes both milk fat, vegetable oil as well as any other lipid types.

For example, the firmness of the butter-derived spread at 5 degrees C may be in the range of 400-1200 g at 5 degrees C, preferably in the range of 450-1000 g, and even more preferred in the range of 500-900 g.

Alternatively, the firmness of the butter-derived spread at 5 degrees C may be in the range of 350-700 g at 5 degrees C, preferably in the range of 375-650 g, and even more preferred in the range of 400-600 g.

The brittleness of a spread product is an important quality parameter, and as stated above, the inventors see it as desirable to obtain coherent, non-brittle spreads. Thus, in some preferred embodiments of the invention the butter-derived spread has a brittleness in the range of 20-150 at 5 degrees C.

The brittleness of the butter-derived spread at 5 degrees C may for example be in the range of 25-100 at 5 degrees C. It may be preferred that the brittleness of the butter-derived spread at 5 degrees C is in the range of 30-80. For example, the brittleness of the butter-derived spread at 5 degrees may be in the range of 30-60.

The brittleness is quantified as the Linear Distance determined according to Example 7.

If a butter-derived spread having about the same lipid content as butter is preferred, the butter-derived spread may comprise:

- lipid in an amount in the range of 75-85% (w/w) relative to the weight of the butter-derived spread,
- milk fat in an amount in the range of 40-75% (w/w) relative to the weight of the butter-derived spread,
- vegetable oil in an amount in the range of 20-40% (w/w) relative to the weight of the butter-derived spread, and
- water in an amount in the range of 10-30% (w/w) relative to the weight of the butter-derived spread.

Alternatively, the butter-derived spread may comprise:

- lipid in an amount in the range of 75-85% (w/w) relative to the weight of the butter-derived spread,
- milk fat in an amount in the range of 35-65% (w/w) relative to the weight of the butter-derived spread,
- vegetable oil in an amount in the range of 20-50% (w/w) relative to the weight of the butter-derived spread, and
- water in an amount in the range of 5-30% (w/w) relative to the weight of the butter-derived spread.

Alternatively, the butter-derived spread may comprise:

- lipid in an amount in the range of 70-90% (w/w) relative to the weight of the butter-derived spread,
- milk fat in an amount in the range of 40-70% (w/w) relative to the weight of the butter-derived spread,
- vegetable oil in an amount in the range of 20-50% (w/w) relative to the weight of the butter-derived spread, and
- water in an amount in the range of 5-30% (w/w) relative to the weight of the butter-derived spread,

said butter-derived spread having a firmness at 5 degrees C in the range of 400-1200 g, and a brittleness at 5 degrees C in the range of 20-150. For example, such a butter-derived spread may have a firmness at 5 degrees C in the range of 450-1000 g, and a brittleness at 5 degrees C in the range of 25-100.

The butter-derived spread may for example comprise vegetable oil in an amount in the range of 25-48% (w/w) relative to the weight of the butter-derived spread. Alternatively, the butter-derived spread may comprise vegetable oil in an amount in the range of 28-46% (w/w) relative to the weight of the butter-derived spread. The butter-derived spread may e.g. comprise vegetable oil in an amount in the range of 30-45% (w/w) relative to the weight of the butter-derived spread.

If a butter-derived spread having a slightly reduced lipid content relative to butter is preferred, the butter-derived spread may comprise:

- lipid in an amount in the range of 50-70% (w/w) relative to the weight of the butter-derived spread,
- milk fat in an amount in the range of 40-60% (w/w) relative to the weight of the butter-derived spread,
- vegetable oil in an amount in the range of 10-30% (w/w) relative to the weight of the butter-derived spread, and
- water in an amount in the range of 15-50% (w/w) relative to the weight of the butter-derived spread.

Such a butter-derived spread may e.g. have a firmness at 5 degrees C in the range of 350-700 g, and a brittleness at 5 degrees C in the range of 20-150. For example, such a butter-derived spread may have a firmness at 5 degrees C in the range of 375-650 g, and a brittleness at 5 degrees C in the range of 25-100.

The butter-derived spread may for example comprise vegetable oil in an amount in the range of 16-38% (w/w) relative to the weight of the butter-derived spread. Alternatively, the butter-derived spread may comprise vegetable oil in an amount in the range of 18-35% (w/w) relative to the weight of the butter-derived spread. The butter-derived spread may e.g. comprise vegetable oil in an amount in the range of 20-30% (w/w) relative to the weight of the butter-derived spread.

If a low lipid butter-derived spread is preferred, the butter-derived spread may comprise:

- lipid in an amount in the range of 30-50% (w/w) relative to the weight of the butter-derived spread,
- milk fat in an amount in the range of 20-45% (w/w) relative to the weight of the butter-derived spread,
- vegetable oil in an amount in the range of 5-25% (w/w) relative to the weight of the butter-derived spread, and
- water in an amount in the range of 10-70% (w/w) relative to the weight of the butter-derived spread.

It should be noted that embodiments and features described in the context of one of the aspects of the present invention also apply to the other aspects of the invention unless stated otherwise or if these features are clearly mutually exclusive. Additionally, features described in the context of different embodiments of the invention can be combined unless stated otherwise or if these features are clearly mutually exclusive.

The invention will now be described in further details in the following non-limiting examples.

**EXAMPLES**

Example 1 Production of product A (prior art)

At 12 degrees C, 58.2 parts butter (81% fat (w/w), 1.7% sodium chloride (w/w)) were passed through a custom-made pilot blend equipment (APV, Denmark), while 32.8 parts rapeseed oil and 9.0 parts salt water (2.4% sodium chloride (w/w) relative to the weight of the salt water) were dosed into the product and mixed to a homogeneous butter blend product, which at 13 degrees C was filled into 250 g plastic tubs and covered with a cover leave and a lid.

It should be noted that the "parts" mentioned in the Examples are parts by weight.

Example 2 Production of product B (prior art)

At 55 degrees C, 58.2 parts butter (81% fat, 1.7% salt), 32.8 parts rapeseed oil and 9.0 parts salt water (2.4% (w/w) sodium chloride relative to the weight of the salt water) were emulsified and passed through an SSHE system (Perfector, Gerstenberg Scröder A/S, Denmark) in which the emulsion was pasteurised at 80 degrees C, then successively cooled and mixed to a filling temperature of 12 degrees C.

Example 3 Production of the product C

The lipid continuous composition was prepared by mixing 34.9 parts butter (81% (w/w) fat, 1.7% sodium chloride (w/w)), 24.6 parts rapeseed oil and 4 parts water at 55 degrees C, thus forming a water-in-lipid emulsion. The lipid-continuous composition was passed through an SSHE system (Perfector, Gerstenberg Scröder A/S, Denmark) in which it was initially pasteurised at 80 degrees C and then successively cooled to a final temperature of 12.3 degrees C while mixed.

The first composition was prepared at 12 degrees C by passing 23.3 parts butter (81% (w/w) fat, 1.7% salt (w/w)) through a pilot blend equipment, while 8.2 parts rapeseed oil and 5.0 parts salt water (4.4% (w/w) sodium chloride relative to the weight of the salt water) and 63.5 parts of the lipid continuous composition (12.3 degrees C) were dosed in and the combined product mixed to a homogeneous butter blend, which was filled at 13 degrees C.

Example 4 Products

Several examples of products of the invention are shown in Tables 1 and 2 - all prepared according to Example 3.

*Table 1 Weight percentage of the ingredients/components used in the various experiments - relative to the first composition, lipid-continuous composition, and the butter-spread product.*

| Ingredients/contents (% w/w) | Product | | | |
|---|---|---|---|---|
| | C | D | E | F |
| First composition | | | | |
|    Butter | 23.3 | 23.3 | 23.3 | 14.6 |
|    Rapeseed oil | 8.2 | 0 | 0 | 0 |
|    Sunflower oil | 0 | 8.2 | 0 | 0 |
|    Water | 4.8 | 4.8 | 4.8 | 4.8 |
|    Sodium chloride | 0.2 | 0.2 | 0.2 | 0.2 |
| | | | | |
| Lipid-continuous composition | | | | |
|    Butter | 34.9 | 34.9 | 34.9 | 43.7 |
|    Anhydrous butter fat | 0 | 0 | 0 | 0 |
|    Rapeseed oil | 24.6 | 0 | 32.8 | 32.8 |
|    Sunflower oil | 0 | 24.6 | 0 | 0 |
|    Water | 4 | 4 | 4 | 4.0 |
|    Sodium chloride | 0 | 0 | 0 | 0 |
| | | | | |
| Final butter-spread Product | | | | |
|    First composition | 36.5 | 36.5 | 28.3 | 19.6 |
|    Lipid-continuous Composition | 63.5 | 63.5 | 71.7 | 80.5 |
|    Total fat | 80.0 | 80.0 | 80.0 | 80.0 |
|    Total butter fat | 47.2 | 47.2 | 47.2 | 47.2 |
|    Total vegetable oil | 32.8 | 32.8 | 32.8 | 32.8 |
|    Total water | 17.9 | 17.5 | 17.9 | 17.9 |
|    Total sodium chloride | 1.2 | 1.2 | 1.2 | 1.2 |
|    Solid non fat (SNF) | 0.9 | 0.9 | 0.9 | 0.9 |

*Table 2 Weight percentage of the ingredients/contents of the various experiments - relative to the first composition, lipid-continuous composition, or the butter-spread product.*

| Ingredients/contents (% w/w) | Product | | | |
|---|---|---|---|---|
| | G | H | I | J |
| First composition | | | | |
|    Butter | 38.9 | 38.9 | 23.3 | 23.3 |
|    Rapeseed oil | 12.5 | 0.0 | 8.2 | 8.2 |
|    Sunflower oil | 0 | 0 | 0 | 0 |
|    Water | 23.1 | 13.1 | 4.8 | 5.0 |
|    Sodium chloride | 0.5 | 0.5 | 0.2 | 0 |
| | | | | |
| Lipid-continuous composition | | | | |
|    Butter | 4.3 | 4.3 | 0 | 34.9 |
|    Anhydrous butter fat | 0 | 0 | 28.3 | 0 |
|    Rapeseed oil | 12.5 | 25.0 | 24.6 | 24.6 |
|    Sunflower oil | 0 | 0 | 0 | 0 |
|    Water | 8.3 | 18.3 | 10 | 4 |
|    Sodium chloride | 0 | 0 | 0.6 | 0 |
| | | | | |
| Final butter-spread Product | | | | |
|    First composition | 75.0 | 52.5 | 36.5 | 36.5 |
|    Lipid-continuous Composition | 25.1 | 47.5 | 63.5 | 63.5 |
|    Total fat | 60.0 | 60.0 | 80.0 | 80.0 |
|    Total butter fat | 35.0 | 35.0 | 47.2 | 47.2 |
|    Total vegetable oil | 25.0 | 25.0 | 32.8 | 32.8 |
|    Total water | 37.9 | 37.9 | 17.9 | 19.1 |
|    Total sodium chloride | 1.2 | 1.2 | 1.2 | 0 |
|    Solid non fat (SNF) | 0.9 | 0.9 | 0.9 | 0.9 |

Example 5 Determination of firmness

The firmness of Product A of Example 1 and Product C of Example 3 was measured on a Texture Analyser (TA.XT$_{plus}$ Texture Analyser, Stable Micro Systems UK). At 5 degrees C, a 60° cone geometry (60° conical Perspex, Part. code P/60C, Batch NO. 4059) was penetrated 8 mm into the sample at a speed of 12 mm/min. The firmness was determined as the maximum load in gram (g) during the penetration.

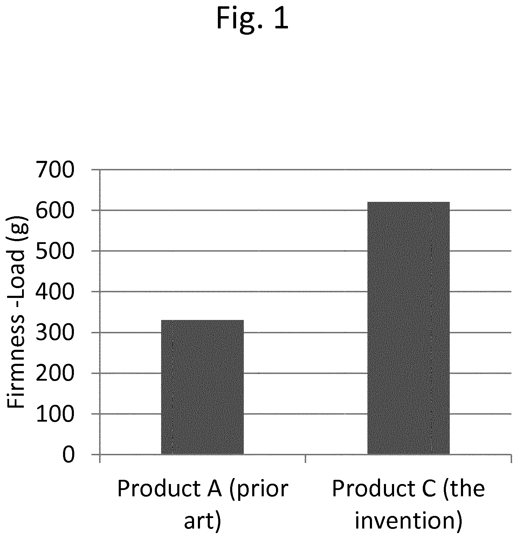

The results are shown in Figure 1, which clearly demonstrate that the firmness of Product C (the product of the invention) is significantly higher than the firmness of Product A (the prior art product).

Example 6 Qualitative determination of brittleness - the knife-scrape test

The brittleness of Products B and C was determined using the knife-scrape test: At 5 degrees C, some spread were scraped off the surface of a block of a spread product with a knife. The spread product equally has a temperature of 5 degrees C. The surface structure of the spread on the knife is used to indicate the degree of brittleness of the spread product.

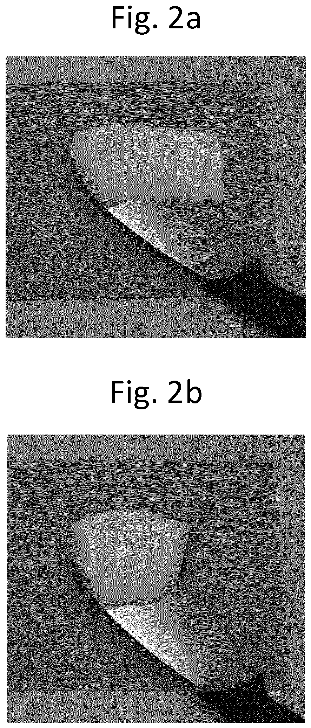

The knife scrapes of Products B and C are depicted in Figs. 2a and 2b. As seen, the Product C (Fig. 2b) had a desirable non-brittle, cohesive consistency illustrated by a smooth coherent surface, while the prior art Product B (Fig. 2a) had a highly brittle consistency illustrated by an uneven, cracked surface.

The knife-scrape test was also performed on Product A, which had a low degree of brittleness, which was to be expected due to the lack of firmness of the product (see Example 5).

Conclusion:

By using the invention, the firmness of a spread can be controlled within a large range, while brittleness is avoided and the cohesiveness is retained. This feature allows for partial replacement of butterfat with vegetable oils, such as mono- and poly-unsaturated oils, while retaining the firmness of the spread.

Example 7 Quantitative determination of brittleness - using the Linear Distance analysis

The Linear Distance can be used to quantify the brittleness of a spread product and has been found to correlate well with the results obtains by the above-mentioned knife-scrape test and sensory evaluation of brittleness.

The Linear Distance is determined using a Texture Analyser (TA.XT$_{plus}$ Texture Analyser, Stable Micro Systems UK) which is equipped with a 60° cone geometry (60° conical Perspex, Part. code P/60C, Batch NO. 4059) and which is connected to a computer, which is responsible of the data acquisition from the Texture Analyser. A tub containing 250 g spread sample having the approx. dimensions 11 cm x 8 cm x 3 cm and having a temperature of 5.0 degrees C is placed in the Texture Analyser, and the cone of the Texture Analyser is allowed to penetrate 8 mm into the sample at a speed of 12 mm/min giving a penetration time of 40 seconds. During the penetration the load on the cone (measured in gram) is sampled at a frequency of 200 Hz giving a total of 8000 data points per spread sample.

Each set of data points is fitted to the following formula by linear regression:

$$f(i) = A * i^2 + B * i + C$$

The difference, *d(i)*, between the measured load, *m(i)*, and the fitted load, *f(i)* is calculated for each data point, *i*, as:

$$d(i) = f(i) - m(i)$$

The linear distance (the brittleness) is determined according to the following formula:

$$Linear\ Distance = \sum_{i=1}^{7999} \sqrt[2]{t^2 + (d_{i+1} - d_i)^2}$$

wherein *t* (the time between two neighbouring data points) is 0.005 seconds, i is the data point number, and $d_i$ is the difference between the measured load and the fitted force at data point no. *i*.

The Texture Analyzer output from brittle spread products are typically characterised by load-vs.-time curves having several sudden rises and drops, whereas coherent, non-brittle spread products are characterised by smooth load-vs.-time curves which fit well with a 2nd degree polynomial. Thus, for a coherent, non-brittle spread product the measured load-vs.-time curve is almost identical to the fitted load-vs.-time curve and the Linear Distance of such products are therefore relatively low. For a brittle spread product the measured load-vs.-time curve shifts back and forth from being higher or lower than the fitted load-vs.-time curve and the Linear Distance (brittleness) of such brittle products are therefore relatively high.

The brittleness/Linear Distance is mentioned herein without units.

Example 8 Spreads of the invention - comparative tests

Two new samples, K and L, of the butter-derived spread of the invention were prepared according to Example 3. Additionally, the ingredients mentioned in Table 3 were used for preparing reference samples using the methodology of Examples 1 (oil blend technology) and 2 (SSHE crystallisation).

Table 3 contains the ingredients and compositions of the samples K and L.

All the samples, both the two samples prepared according to Example 3 and the reference samples prepared according to Examples 1 and 2, were subjected to determination of firmness and brittleness according to the tests described in Examples 5 and 7.

Table 4 summarises the results obtained.

*Table 3 Weight percentage of the ingredients/contents of the various experiments - relative to the first composition, lipid-continuous composition, or the butter-spread product.*

| Ingredients/contents (% w/w) | Products | |
|---|---|---|
| | K | L |
| First composition | | |
|    Butterfat | 15.58 | 31.5 |
|    Rapeseed oil | 8.2 | 0.0 |
|    Water | 10.3 | 18.7 |
|    Sodium chloride | 0.5 | 0.1 |
| | | |
| Lipid-continuous composition | | |
|    Butterfat | 31.62 | 3.5 |
|    Rapeseed oil | 24.6 | 25.0 |
|    Water | 7.1 | 19.2 |
|    Sodium chloride | 1.2 | 1.1 |
| | | |
| Final butter-spread product | | |
|    First composition | 35.0 | 51.0 |
|    Lipid-continuous Composition | 65.0 | 49.0 |
|    Total fat | 80.0 | 60.0 |
|    Total butter fat | 47.2 | 35.0 |
|    Total vegetable oil | 32.8 | 25.0 |
|    Total water | 17.4 | 37.9 |
|    Total sodium chloride | 1.7 | 1.2 |
|    Solid non fat (SNF) | 0.9 | 0.9 |

*Table 4 Results: firmness and brittleness of the spread samples K and L compared to prior art spreads based on similar ingredients and prepared according to the Examples 1 and 2.*

| | Products | |
|---|---|---|
| | K | L |
| Total lipid contents % (w/w) | 80.0 | 60.0 |
| Total milk fat % (w/w) | 47.2 | 35.0 |
| Total vegetable oil % (w/w) | 32.8 | 25.0 |
| Firmness | 825 | 400 |
| Brittleness | 47 | 47 |
| **Comparative data:** | | |
| Ex. 1 - firmness | 375 | 291 |
| Ex. 1 - brittleness | 41 | 47 |

(continued)

| Comparative data: | | |
|---|---|---|
| Ex. 2 - firmness | 1174 | 1017 |
| Ex. 2 - brittleness | 439 | 472 |

Conclusion:

The above results demonstrate that the new method allows for the production of spread products which have a unique combination of firmness and brittleness for a given set of ingredients. Such a combination of firmness and brittleness cannot be obtained by the methods of the prior art. The spread products obtained according to Example 2 (re-crystallisation of milk fat) were generally very firm but also unacceptably brittle. Spread products prepared according to Example 1 (the oil blend technology) had an acceptable brittleness, but were significantly softer than the spreads prepared by the new method.

Example 9 Characterisation by confocal microscopy

Three spread samples (one prepared using the new method, one prepared according to Example 1, and one prepared according to Example 2) were stained with the fluorescent dye fluorescein isothiocyanate (FITC) dissolved in acetone.
FITC binds specifically to protein, which tends to be present in the water of the spread products. FITC staining is therefore useful for visualising the distribution of water in spread products.
The stained spread samples were then subjected to confocal microscopy specific for the FITC-dye, and the resulting images have been reproduced in Figs. 3a-c. The spread depicted in Fig. 3a is the spread according to the invention. The water of this spread is present in well-defined, spherically shaped droplets of substantially the same size.
The prior art spreads are depicted in Figs. 3b and 3c, which show a more uneven distribution of water, including large regions of merged water droplets. This indicates that the advantageous characteristics of the new spread product of the invention may be related to a more homogeneous and uniform distribution of water in the product.

**Claims**

1.  A butter-derived spread comprising:

    - lipid in an amount in the range of 30-50% (w/w) relative to the weight of the butter-derived spread,
    - milk fat in an amount in the range of 20-45% (w/w) relative to the weight of the butter-derived spread,
    - vegetable oil in an amount in the range of 5-25% (w/w) relative to the weight of the butter-derived spread, and
    - water in an amount in the range of 10-70% (w/w) relative to the weight of the butter-derived spread.

2.  The butter-derived spread according to claim 1, said butter-derived spread having a firmness at 5 degrees C in the range of 400-1200 g, preferably in the range of 450-1000 g, and even more preferred in the range of 500-900 g or said butter-derived spread has a firmness at 5 degrees C in the range of 350-700 g, preferably in the range of 375-650 g, and even more preferred in the range of 400-600 g.

3.  The butter-derived spread according to any of claims 1-2, said butter-derived spread having a brittleness at 5 degrees C in the range of 20-150, for example be in the range of 25-100, such as in the range of 30-80, for example in the range of 30-60.

4.  The butter-derived spread according to any of claims 1-2, said butter-derived spread having a brittleness at 5 degrees C in the range of 40-150, for example be in the range of 40-100, such as in the range of 40-80, for example in the range of 40-60.

5.  The butter-derived spread according to any of claims 1-4, wherein the butter-derived spread has the following fatty acid profile:

    C14:0               4-8%

(continued)

| | |
|---|---|
| C16:0 | 17-23% |
| C18:0 | 5-8% |
| C18:1,n-9 | 30-40% |
| C18:2, n-6 | 5-12% |
| C18:3, n-3 | 2-6% |
| Other fatty acids | 15-20% |

wherein the percentages are weight percentages relative to the total amount of fatty acids of the butter-derived spread, both including free and esterified fatty acids.

6. The butter-derived spread according to any of the claims 1-5, wherein the butter-derived spread has the following distribution between saturated, mono-unsaturated and poly-unsaturated fatty acids:

| | |
|---|---|
| Saturated fatty acids | 35-50% |
| Mono-unsaturated fatty acids | 35-45% |
| Poly-unsaturated fatty acids | 10-18% |

wherein the percentages are weight percentages relative to the total amount of fatty acids of the butter-derived spread, both including free and esterified fatty acids.

7. A butter-derived spread according to any of the preceding claims obtainable by a method comprising the steps of:

a) providing a first composition comprising a first butter,
b) providing a lipid-continuous composition comprising a milk fat source, the lipid-continuous composition having a temperature of at least $T_1$, wherein $T_1$ is at least 20 degrees C,
c) cooling the lipid-continuous composition to a temperature below $T_1$, thus forming a cooled lipid-continuous composition,
d) forming the butter-derived spread comprising the cooled lipid-continuous composition and the first composition.

8. The butter-derived spread according to claim 7, wherein the cooling of step c) is a separate from step d), i.e. the lipid-continuous composition has been cooled before it is mixed with the first composition.

9. The butter-derived spread according to any of claims 7 or 8, wherein the temperature of the ingredients of the butter-derived spread is in the range of 5-18 degrees C during step d).

10. A method of producing the butter-derived spread according to any of the claims 1-6, the method comprising the steps of:

a) providing a first composition comprising a first butter,
b) providing a lipid-continuous composition comprising a milk fat source, the lipid-continuous composition having a temperature of at least $T_1$, wherein $T_1$ is at least 20 degrees C,
c) cooling the lipid-continuous composition to a temperature below $T_1$, thus forming a cooled lipid-continuous composition,
d) forming the butter-derived spread comprising the cooled lipid-continuous composition and the first composition.

11. The method according to claim 10, wherein the temperature of the lipid-continuous composition is in the range of 20-90 degrees C.

12. The method according to any of the claims 10-11, wherein the cooling of step c) is a separate from step d), i.e. the lipid-continuous composition has been cooled before it is mixed with the first composition.

13. The method according to any of the claims 10-12, wherein the temperature of the ingredients of the butter-derived spread is in the range of 5-18 degrees C during step d).

14. The method according to any of the claims 10-13, wherein the butter-derived spread comprises the first composition in an amount in the range of 5-90% (w/w) relative to the total weight of the butter-derived spread.

15. The method according to any of the claims 10-14, wherein the butter-derived spread comprises the cooled lipid-continuous composition in an amount in the range of 5-95% (w/w) relative to the total weight of the butter-derived spread.

16. The method according to any of the claims 10-15, wherein the lipid-continuous composition comprises vegetable oil in an amount in the range of 20-50% (w/w) relative to the total weight of the lipid-continuous composition.

**Patentansprüche**

1. Butter-abgeleiteter Brotaufstrich, umfassend:

   - Lipid in einer Menge im Bereich von 30-50 % (w/w) relativ zu dem Gewicht des Butter-abgeleiteten Brotaufstrichs,
   - Milchfett in einer Menge im Bereich von 20-45 % (w/w) relativ zu dem Gewicht des Butter-abgeleiteten Brotaufstrichs,
   - pflanzliches Öl in einer Menge im Bereich von 5-25 % (w/w) relativ zu dem Gewicht des Butter-abgeleiteten Brotaufstrichs, und
   - Wasser in einer Menge im Bereich von 10-70 % (w/w) relativ zu dem Gewicht des Butter-abgeleiteten Brotaufstrichs.

2. Butter-abgeleiteter Brotaufstrich nach Anspruch 1, wobei der Butter-abgeleitete Brotaufstrich eine Dichtigkeit bei 5 Grad C im Bereich von 400-1200 g, vorzugsweise im Bereich von 450-1000 g, und noch weiter bevorzugt im Bereich von 500-900 g aufweist oder der Butter-abgeleitete Brotaufstrich eine Dichtigkeit bei 5 Grad C im Bereich von 350-700 g, vorzugsweise im Bereich von 375-650 g, und noch weiter bevorzugt im Bereich von 400-600 g aufweist.

3. Butter-abgeleiteter Brotaufstrich nach einem der Ansprüche 1-2, wobei der Butter-abgeleitete Brotaufstrich eine Brüchigkeit bei 5 Grad C im Bereich von 20-150, zum Beispiel im Bereich von 25-100, sowie im Bereich von 30-80, zum Beispiel im Bereich von 30-60 aufweist.

4. Butter-abgeleiteter Brotaufstrich nach einem der Ansprüche 1-2, wobei der Butter-abgeleitete Brotaufstrich eine Brüchigkeit bei 5 Grad C im Bereich von 40-150, zum Beispiel im Bereich von 40-100, sowie im Bereich von 40-80, zum Beispiel im Bereich von 40-60 aufweist.

5. Butter-abgeleiteter Brotaufstrich nach einem der Ansprüche 1-4, wobei der Butter-abgeleitete Brotaufstrich das folgende Fettsäureprofil aufweist:

| | |
|---|---|
| C14:0 | 4-8 % |
| C16:0 | 17-23 % |
| C18:0 | 5-8 % |
| C18:1, n-9 | 30-40 % |
| C18:2, n-6 | 5-12 % |
| C18:3, n-3 | 2-6 % |
| andere Fettsäuren | 15-20 % |

wobei die Prozentsätze relative Gewichtsprozentsätze zu der Gesamtmenge der Fettsäuren des Butter-abgeleiteten Brotaufstrichs sind, die sowohl freie als auch veresterte Fettsäuren umfassen.

6. Butter-abgeleiteter Brotaufstrich nach einem der Ansprüche 1-5, wobei der Butter-abgeleitete Brotaufstrich die folgende Verteilung zwischen gesättigten, einfach ungesättigten und mehrfach ungesättigten Fettsäuren aufweist:

| gesättigte Fettsäuren | 35-50 % |
| einfach ungesättigte Fettsäuren | 35-45 % |
| mehrfach ungesättigten Fettsäuren | 10-18 % |

wobei die Prozentsätze relative Gewichtsprozentsätze zu der Gesamtmenge der Fettsäuren des Butter-abgeleiteten Brotaufstrichs sind, die sowohl freie als auch veresterte Fettsäuren umfassen.

7. Butter-abgeleiteter Brotaufstrich nach einem der vorstehenden Ansprüchen, erhältlich durch ein Verfahren, umfassend die Schritte:

   a) Bereitstellen einer ersten Zusammensetzung, die eine erste Butter umfasst,
   b) Bereitstellen einer Lipid-kontinuierlichen Zusammensetzung, die eine Milchfettquelle umfasst, die Lipid-kontinuierliche Zusammensetzung eine Temperatur von wenigstens $T_1$ aufweist, wobei $T_1$ wenigstens 20 Grad C ist,
   c) Abkühlen der Lipid-kontinuierlichen Zusammensetzung auf eine Temperatur unterhalb von $T_1$, wodurch eine gekühlte Lipid-kontinuierliche Zusammensetzung gebildet wird,
   d) Bilden des Butter-abgeleiteten Brotaufstrichs, der die gekühlte Lipid-kontinuierliche Zusammensetzung und die erste Zusammensetzung umfasst.

8. Butter-abgeleiteter Brotaufstrich nach Anspruch 7, wobei das Abkühlen von Schritt c) von Schritt d) getrennt ist, d.h. die Lipid-kontinuierliche Zusammensetzung ist abgekühlt worden, bevor sie mit der ersten Zusammensetzung gemischt wird.

9. Butter-abgeleiteter Brotaufstrich nach einem der Ansprüche 7 oder 8, wobei die Temperatur der Inhaltsstoffe des Butter-abgeleiteten Brotaufstrichs während Schritt d) im Bereich von 5-18 Grad C liegt.

10. Verfahren zur Herstellung des Butter-abgeleiteten Brotaufstrichs nach einem der Ansprüche 1-6, das Verfahren umfasst die Schritte:

    a) Bereitstellen einer ersten Zusammensetzung, die eine erste Butter umfasst,
    b) Bereitstellen einer Lipid-kontinuierlichen Zusammensetzung, die eine Milchfettquelle umfasst, die Lipid-kontinuierliche Zusammensetzung eine Temperatur von wenigstens $T_1$ aufweist, wobei $T_1$ wenigstens 20 Grad C ist,
    c) Abkühlen der Lipid-kontinuierlichen Zusammensetzung auf eine Temperatur unterhalb von $T_1$, wodurch eine gekühlte Lipid-kontinuierliche Zusammensetzung gebildet wird,
    d) Bilden des Butter-abgeleiteten Brotaufstrichs, der die gekühlte Lipid-kontinuierliche Zusammensetzung und die erste Zusammensetzung umfasst.

11. Verfahren nach Anspruch 10, wobei die Temperatur der Lipid-kontinuierlichen Zusammensetzung im Bereich von 20-90 Grad C liegt.

12. Verfahren nach einem der Ansprüche 10-11, wobei das Abkühlen von Schritt c) von Schritt d) getrennt ist, d.h. die Lipid-kontinuierliche Zusammensetzung ist abgekühlt worden, bevor sie mit der ersten Zusammensetzung gemischt wird.

13. Verfahren nach einem der Ansprüche 10-12, wobei die Temperatur der Inhaltsstoffe des Butter-abgeleiteten Brotaufstrichs während Schritt d) im Bereich von 5-18 Grad C liegt.

14. Verfahren nach einem der Ansprüche 10-13, wobei der Butter-abgeleitete Brotaufstrich die erste Zusammensetzung in einer Menge im Bereich von 5-90 % (w/w) relativ zu dem Gesamtgewicht des Butter-abgeleiteten Brotaufstrichs umfasst.

15. Verfahren nach einem der Ansprüche 10-14, wobei der Butter-abgeleitete Brotaufstrich die gekühlte Lipid-kontinuierliche Zusammensetzung in einer Menge im Bereich von 5-95% (w/w) relativ zu dem Gesamtgewicht des Butter-abgeleiteten Brotaufstrichs umfasst.

16. Verfahren nach einem der Ansprüche 10-15, wobei der Butter-abgeleitete Brotaufstrich pflanzliches Öl in einer Menge im Bereich von 20-50 % (w/w) relativ zu dem Gewicht des Butter-abgeleiteten Brotaufstrichs umfasst.

**Revendications**

1. Pâte à tartiner à base de beurre comprenant :

   - un lipide en quantité dans la plage de 30 à 50 % (en p/p) par rapport au poids de la pâte à tartiner à base de beurre,
   - de la graisse de lait en quantité dans la plage de 20 à 45 % (en p/p) par rapport au poids de la pâte à tartiner à base de beurre,
   - une huile végétale en quantité dans la plage de 5 à 25 % (en p/p) par rapport au poids de la pâte à tartiner à base de beurre, et
   - de l'eau en quantité dans la plage de 10 à 70 % (en p/p) par rapport au poids de la pâte à tartiner à base de beurre.

2. Pâte à tartiner à base de beurre selon la revendication 1, ladite pâte à tartiner à base de beurre ayant une fermeté à 5 degrés C dans la plage de 400 à 1 200 g, de préférence dans la plage de 450 à 1000 g, mieux encore dans la plage de 500 à 900 g, ou ladite pâte à tartiner à base de beurre ayant une fermeté à 5 degrés C dans la plage de 350 à 700 g, de préférence dans la plage de 375 à 650 g, mieux encore dans la plage de 400 à 600 g.

3. Pâte à tartiner à base de beurre selon l'une quelconque des revendications 1 à 2, ladite pâte à tartiner à base de beurre ayant une fragilité à 5 degrés C dans la plage de 20 à 150, par exemple dans la plage de 25 à 100, notamment dans la plage de 30 à 80, par exemple dans la plage de 30 à 60.

4. Pâte à tartiner à base de beurre selon l'une quelconque des revendications 1 à 2, ladite pâte à tartiner à base de beurre ayant une fragilité à 5 degrés C dans la plage de 40 à 150, par exemple dans la plage de 40 à 100, notamment dans la plage de 40 à 80, par exemple dans la plage de 40 à 60.

5. Pâte à tartiner à base de beurre selon l'une quelconque des revendications 1 à 4, dans laquelle la pâte à tartiner à base de beurre a le profil d'acides gras suivant :

   | | |
   |---|---|
   | C14:0 | 4-8 % |
   | C16:0 | 17-23 % |
   | C18:0 | 5-8 % |
   | C18:1, n-9 | 30-40 % |
   | C18:2, n-6 | 5-12 % |
   | C18:3, n-3 | 2-6 % |
   | Autres acides gras | 15-20 % |

   dans laquelle les pourcentages sont des pourcentages en poids par rapport à la quantité totale d'acides gras de la pâte à tartiner à base de beurre, comprenant des acides gras à la fois libres et estérifiés.

6. Pâte à tartiner à base de beurre selon l'une quelconque des revendications 1 à 5, dans laquelle la pâte à tartiner à base de beurre présente la distribution suivante entre acides gras saturés, acides gras monoinsaturés et acides gras polyinsaturés :

   | | |
   |---|---|
   | Acides gras saturés | 35-50 % |
   | Acides gras monoinsaturés | 35-45 % |
   | Acides gras polyinsaturés | 10-18 % |

   dans laquelle les pourcentages sont des pourcentages en poids par rapport à la quantité totale d'acides gras de la pâte à tartiner à base de beurre, comprenant des acides gras à la fois libres et estérifiés.

7. Pâte à tartiner à base de beurre selon l'une quelconque des revendications précédentes que l'on peut obtenir par un procédé comprenant les étapes consistant à :

   a) fournir une première composition comprenant un premier beurre,
   b) fournir une composition lipidique continue comprenant une source de graisse de lait, la composition lipidique continue ayant une température d'au moins $T_1$, dans laquelle $T_1$ est d'au moins 20 degrés C,
   c) refroidir la composition lipidique continue à une température en dessous de $T_1$, en formant de la sorte une composition lipidique continue refroidie,

d) former la pâte à tartiner à base de beurre comprenant la composition lipidique continue refroidie et la première composition.

8. Pâte à tartiner à base de beurre selon la revendication 7, dans laquelle le refroidissement de l'étape c) est une étape séparée de l'étape d), c'est-à-dire que la composition lipidique continue a été refroidie avant qu'elle ne soit mélangée avec la première composition.

9. Pâte à tartiner à base de beurre selon l'une quelconque des revendications 7 ou 8, dans laquelle la température des ingrédients de la pâte à tartiner à base de beurre se situe dans la plage de 5 à 18 degrés C au cours de l'étape d).

10. Procédé de production de la pâte à tartiner à base de beurre selon l'une quelconque des revendications 1 à 6, le procédé comprenant les étapes consistant à :

a) fournir une première composition comprenant un premier beurre,

b) fournir une composition lipidique continue comprenant une source de graisse de lait, la composition lipidique continue ayant une température d'au moins $T_1$, dans lequel $T_1$ est d'au moins 20 degrés C,

c) refroidir la composition lipidique continue à une température en dessous de $T_1$, formant de la sorte une composition lipidique continue refroidie,

d) former la pâte à tartiner à base de beurre comprenant la composition lipidique continue refroidie et la première composition.

11. Procédé selon la revendication 10, dans lequel la température de la composition lipidique continue se situe dans la plage de 20 à 90 degrés C.

12. Procédé selon l'une quelconque des revendications 10 à 11, dans lequel le refroidissement de l'étape c) est une étape séparée de l'étape d), c'est-à-dire que la composition lipidique continue a été refroidie avant qu'elle ne soit mélangée à la première composition.

13. Procédé selon l'une quelconque des revendications 10 à 12, dans lequel la température des ingrédients de la pâte à tartiner à base de beurre se situe dans la plage de 5 à 18 degrés C au cours de l'étape d).

14. Procédé selon l'une quelconque des revendications 10 à 13, dans lequel la pâte à tartiner à base de beurre comprend la première composition en quantité dans la plage de 5 à 90 % (en p/p) par rapport au poids total de la pâte à tartiner à base de beurre.

15. Procédé selon l'une quelconque des revendications 10 à 14, dans lequel la pâte à tartiner à base de beurre comprend la composition lipidique continue refroidie en quantité dans la plage de 5 à 95 % (en p/p) par rapport au poids total de la pâte à tartiner à base de beurre.

16. Procédé selon l'une quelconque des revendications 10 à 15, dans lequel la composition lipidique continue comprend de l'huile végétale en quantité dans la plage de 20 à 50 % (en p/p) par rapport au poids total de la composition lipidique continue.

Fig. 1

## Fig. 2a

## Fig. 2b

Fig. 3a

Fig. 3b

Fig. 3c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0393739 A2
- EP 0063389 B1
- WO 2005041677 A

**Non-patent literature cited in the description**

- Dairy Processing Handbook. 2003
- **TETRA PAK.** Dairy Processing Handbook. 2003